# EUROPÄISCHE PATENTSCHRIFT

(11) **EP 3 357 633 B1**
(45) Veröffentlichungstag und Bekanntmachung des Hinweises auf die Patenterteilung: **08.12.2021**
(21) Anmeldenummer: 17197279.7
(22) Anmeldetag: 19.10.2017
(51) Int. Cl.: B23Q 1/00, B23Q 17/24, G01V 8/12

(54) **MESSSYSTEM ZUR MESSUNG AN WERKZEUGEN IN EINER WERKZEUGMASCHINE**
MEASURING SYSTEM FOR MEASUREMENT ON TOOLS IN A MACHINE TOOL
SYSTÈME DE MESURE PERMETTANT DE MESURER DES OUTILS DANS UNE MACHINE-OUTIL

(30) Priorität: 24.10.2016 DE 102016012725
(43) Veröffentlichungstag der Anmeldung: 08.08.2018
(73) Patentinhaber: Blum-Novotest GmbH, 88287 Grünkraut-Gullen (DE)
(72) Erfinder: BUCHER, Heribert, 88069 Tettnang (DE); KLUGGER, Martin, 88287 Gruenkraut (DE); MOERSCH, Norbert, 88239 Wangen (DE)
(74) Vertreter: Schmidt, Steffen J.

(56) Entgegenhaltungen:
- EP-A2- 0 723 311
- DE-A1- 3 241 710
- DE-A1- 3 434 461
- DE-A1- 4 121 764
- DE-A1- 10 065 585
- DE-A1- 10 114 827
- DE-A1-102007 061 887
- DE-A1-102008 017 349
- DE-A1-102010 013 880
- DE-A1-102013 100 155
- DE-A1-102013 101 823

## Beschreibung

### Hintergrund

Nachstehend wird ein Messsystem zur berührungslosen Messung an Werkzeugen in einer Werkzeugmaschine beschrieben. Derartige Messsysteme sind bei der Span abhebenden oder Material abtragenden Bearbeitung (z. B. Fräsen, Drehen, Schleifen, Hobeln, Bohren, Senken, Reiben, Erodieren und dergleichen), auch in kombinierten Dreh-/Fräsmaschinen oder Fräs-/Drehmaschinen mit stehenden oder sich drehenden Werkzeugen einzusetzen. Merkmale und Eigenschaften des Messsystems sind in den Ansprüchen definiert; aber auch die Beschreibung und die Figuren offenbaren Charakteristika des Messsystems und seiner unterschiedlichen Aspekte.

### Stand der Technik

Lasersysteme zur Messung an Werkzeugen haben bisher eine oder mehrere Pneumatikzu- und -ableitungen, um Sperrluft bereitzustellen, einen Durchtritt für Laserlicht zu steuern, und das Werkzeug zu reinigen, etc. Außerdem erfordern sie elektrische Leitungen zur Bereitstellung der Versorgungsleistung und der Betriebssignale (Spannungsversorgung der Steuerung, Laseraktivierung, Messsignale, etc.). Entsprechendes gilt auch für taktil messende Messsysteme in Werkzeugmaschinen.

Derartige Messsysteme sind üblicherweise auf einem Maschinentisch der Werkzeugmaschine, innerhalb deren Arbeitsraums installiert. Um den Arbeitsraum möglichst frei zu lassen oder auch keine Kollisionsbereiche mit den verfahrenden Werkzeugen zu schaffen, werden die Messsysteme in manchen Bauarten auch über eine Schwenk- oder Lineareinheit in eine im Arbeitsraum befindliche Messposition gefahren und nach dem Messvorgang am Werkzeug wieder in eine außerhalb des Arbeitsraums befindliche Park-/Ruheposition bewegt. Bei einfacheren Varianten wird das Messsystem insgesamt abgebaut, sofern es in bestimmten Fertigungsabläufen nicht regelmäßig notwendig ist.

Diese Messsysteme stellen im Arbeitsraum der Maschine in der Regel eine platzraubende Störkontur dar und schränken den Nutzraum ein, oder sie stellen eine ständige Kollisionsgefahr dar. Damit sind diese Messsysteme der Gefahr von Beschädigungen durch große Werkstücke, Späne oder auch Werkzeuge ausgesetzt. Zusätzlich benötigen sie eine oder mehrere Leitungen im Arbeitsraum der Maschine.

Die Bereitstellung, Verlegung und Montage der Versorgungs- und Steuerleitungen (Druckluft- und elektrische Leitungen) stellt insbesondere auch bei verfahr- oder schwenkbaren Messsystemen einen erheblichen Aufwand dar; auch das passgenaue Montieren des Messsystems sowie das Anschließen der Pneumatik- / Elektrikverbinder ist aufwendig. Üblicherweise werden mehrere Pneumatikleitungen und mehrere elektrische Leitungen benötigt, um das Messsystem mit der Maschinensteuerung der Werkzeugmaschine zu verbinden.

Der Lichtmengensensor optoCONTROL 1200/1201 der MICRO-EPSILON Eltrotec Gmbh (www. micro-epsilon. com) wird zur Spalt-, Kanten- und Lichtmengenmessung eingesetzt und besteht aus einer Lichtquelle und einer davon separaten Empfängereinheit. Die Steuerungselektronik ist im Empfängergehäuse untergebracht. Die Empfängereinheit und die Lichtquelle sind getrennt voneinander montierbar und werden über separate Versorgungs- und Ausgangskabel betrieben. Eine pneumatische Versorgung ist bei diesem Messsystem nicht vorgesehen.

Ein einwechselbarer "Pick Up Toolsetter" 35.40 von m&h Inprocess Messtechnik GmbH (www.mh-inprocess.com) mit Infrarot-Datenübertragung stellt eine Lösung ohne Störkontur und Kabel dar. Dieses taktile Messsystem ist manuell oder automatisch in eine an der Seite des Arbeitstisches angeflanschte Wechselhalterung einwechselbar. Das Messsystem wird von außen in eine selbst zentrierende Halterung gedrückt und rastet dort ein. Nach dem taktilen Vermessen des Werkzeugs kann das Messsystem aus der Halterung gezogen werden. Bei diesem Messsystem sind ebenfalls keine Pneumatikleitungen vorgesehen; es ist deshalb nur sehr bedingt mit dem Messsystem der hier betrachteten Gattung vergleichbar.

Ein Beispiel eines berührungslos messenden Werkzeugabtasters in Gestalt einer Lasermessstrecke ist zum Beispiel aus der DE 10 2008 017 349 A1 bekannt. Ein solches Messsystem dient zur Messung an Werkzeugen in einer Werkzeugmaschine. Es hat eine Lichtschrankenanordnung zum Beispiel zur Positionsbestimmung eines Werkzeuges oder zur Bestimmung der längsten Schneide eines rotierenden Werkzeuges in der Werkzeugmaschine. Das Messsystem hat eine Pneumatiksteuerung, um in dem Messsystem Druckluft für verschiedene Funktionen (Laserstrahlsender und Laserstrahlempfänger freiblasen, Schutzblenden vor dem Laserstrahlsender und Laserstrahlempfänger öffnen/schließen) bereitzustellen und mindestens eine elektronische Steuerung zum Betreiben der Lichtschrankenanordnung, zum Empfangen von Messsignalen von der Lichtschrankenanordnung und zum Abgeben von Messsignalen in einem Signalübertragungsmedium an die Maschinensteuerung, sowie zum Bereitstellen von Steuersignalen für die Pneumatiksteuerung. Aus diesem Dokument ist eine Variante eines Messsystems zur berührungslosen Messung an Werkzeugen in einer Werkzeugmaschine bekannt, die ohne elektrische Verbinder auskommt, weil die elektrische Versorgungsenergie mittels einer fluidelektrischen Wandlers bereitgestellt wird, dem aus einer aus anderen Gründen erforderlichen Pneumatikquelle Druckluft eingespeist wird. Dies reduziert den Aufwand und etwaige Fehlerquellen in der elektrischen Verbindung.

Die DE 10 2013 100 155 A1 betrifft eine mechanische Schnittstelle für die Kopplung von einem Modul an einen Modulträger welche eine erste Schnittstellenkomponente und eine dazu komplementäre zweite Schnittstellenkomponente, ein Positionierungsmittel zur wiederholbaren Positionierung der zweiten Schnittstellenkomponente und der ersten Schnittstellenkomponente zueinander in einer vorbestimmten Position und ein Haltemittel zur Halterung der zweiten Schnittstellenkomponente an der ersten Schnittstellenkomponente, ausgebildet ist. Die Schnittstelle hat ein Datenübertragungsmittel zur Übertragung von Daten zwischen der ersten und der zweiten Schnittstellenkomponente und ein Leistungsübertragungsmittel zur Übertragung von elektrischer Leistung zwischen der ersten und der zweiten Schnittstellenkomponente. Diese sehr abstrakte beschriebene Anordnung ist für die oben beschriebene Einsatz-Situation weder gedacht noch ausgelegt. Dieses Dokument versucht auf sehr abstraktem Niveau, durch Definition und Speicherung entsprechender Kopplungs-klassen prozesstechnisch inkompatible Kopplungsvorgänge (Öl und Wasser / Luft) zu trennen. Eine gleichzeitige Kopplung solcher Module kann dann aufgrund der unterschiedlich ausgelegten Anwendungsbereiche der beiden Module die Durchführung eines Arbeitsprozesses verhindern.

DE 34 34 461 A1 betrifft eine Vorrichtung zur optoelektronischen Werkzeugbruchüberwachung, bestehend aus einem Lichtsender und einem Lichtempfänger, deren das Vorhandensein oder Nichtvorhandensein des Werkzeugs beziehungsweise der Werkzeuge anzeigende Signale einer Auswerteelektronik zugeführt werden. Jeweils ein Lichtsender und ein Lichtempfänger sind in einem Gehäuse zu einem Reflexlichtsensor zusammengefügt, der jeweils in der Nähe eines zu überwachenden Werkzeugs angeordnet ist. Im Gehäuse des Reflexlichtsensors ist eine die Endteile des Lichtsenders und des Lichtempfängers freiblasende Luftdüse untergebracht.

Eine Steckleiste versorgt die elektronischen Bauelemente mit Strom und leitet die Signale zur Auswerteelektronik.

Die DE 10 2010 013 880 A1 zeigt in herkömmlicher Weise verbaute, mehrere mit individuellen Steck-/Schraubverbindern angeschlossene Leitungen für Luft und Elektroanschlüsse einer Laser-Messstrecke.

Die DE 32 41 710 A1 betrifft einen elektro-optischen Tastkopf, der direkt auf einer Werkzeugmaschine in der Werkzeugaufnahme zu montieren ist. Nach der Bearbeitung des Werkstückes wird in der Werkzeugaufnahme das Werkzeug durch den Tastkopf ersetzt. Der Tastkopf überträgt seine Licht- und/oder elektrischen Signale über ein eingreifendes Teil, das über eine passende Kupplung der Spindel oder einem Kopf mit der Werkzeugmaschine verbindbar ist. Die elektrische Energie ist durch Leitungen zugeführt, die durch die Kupplung laufen, und in gleicher Weise wird das gegen das Werkstück zu reflektierende Licht auch durch Glasfasern übertragen, die durch die Kupplung verlaufen. Eine Strömungsmittelleitung, die normalerweise dazu verwendet wird, Kühlflüssigkeit zu einem Werkzeug zu bringen, wird von Kühlmittel gereinigt und statt dessen dazu verwendet, Luft in den Tastkopf zu bringen, die durch passende Düsen an dessen Ende austritt, um das Werkstück vor der elektro-optischen Abtastung zu reinigen.

Die DE 10 2007 061 887 A1 betrifft eine Einrichtung zur laserbasierten Werkstückmessung an Drehmaschinen, in denen wellenförmige Teile vermessen werden sollen. Die Einrichtung weist eine Lasermesseinrichtung sowie eine Ablagestation für die Lasermesseinrichtung auf, wobei die Lasermesseinrichtung ein Koppelstück besitzt, welches mit einem Adapter eines Werkzeugsystems der Drehmaschine erfassbar ist. Die Lasermesseinrichtung wird so durch das Werkzeugsystem sowohl an Messpositionen am Werkstück als auch in eine Ruheposition in der Ablagestation transportiert. Die Lasermesseinrichtung kann über einen elektrischen Energiespeicher sowie einen Datenspeicher verfügen, so dass ein autarker Messbetrieb erfolgen kann. An der Lasermesseinrichtung ist ein Koppelstück in Form einer modifizierten Standardschnittstelle angeordnet, das mit einem Adapter des Werkzeugsystems korrespon-diert. Das Koppelstück wird magnetisch gespannt. Die Ausnehmung, in der die Ablgestation angeordnet ist, ist durch Türen verschließbar. Die Lasermesseinrichtung hat einen elektrischen Akkumulator sowie einen Datenspeichers (RAM) zur Speicherung von Messdaten. Der Akkumulator versorgt sowohl den Laser als auch die Speichereinheit mit elektrischer Energie. An der Ablagestation sind eine kontaktlos arbeitende Einrichtung zur Ladung des elektrischen Akkumulators sowie eine ebenfalls kontaktlos arbeitende Einrichtung zum Auslesen der Messdaten aus dem Datenspeicher angeordnet. Während der Messung werden die Messdaten in den Speicher der Lasermesseinrichtung eingelesen. Nachdem die Lasermesseinrichtung in der Ablagestation abgelegt wurde, werden die Messdaten aus dem Speicher ausgelesen und zur Weiterverarbeitung geleitet. Danach wird der Speicher zurückgesetzt und so für die Aufnahme neuer Messdaten vorbereitet. Parallel dazu erfolgt ein Nachladen des elektrischen Akkumulators.

### Aufgabe

Ausgehend hiervon besteht das Problem darin, eine Lösung für eine vereinfachte und sichere Handhabung eines Messsystems für Messungen an stehenden oder rotierenden, Material abtragenden Werkzeugen in einer Werkzeugmaschine anzugeben.

### Vorgeschlagene Lösung

Diese Aufgabe löst das im Patentanspruch 1 angegebene berührungslos messende Messsystem.

Der Mehrzweckschnittstellensockel bietet eine mechanische, eine elektrisch/optische Signal-, und/ oder pneumatische Fluid-Verbindung zwischen der Maschinensteuerung der Werkzeugmaschine und dem Messgerät. Diese Schnittstelle bietet eine mechanisch wiederholgenaue Messgeräteplatzierung. Vorgespannte Stifte oder Spannstifte sind in der Lage, kleinere Toleranzen zwischen dem Mehrzweckschnittstellensockel und dem Messgerät ausgleichen. Dazu hat der Mehrzweckschnittstellensockel einen oder mehrere vorzugsweise federnde Passstifte.

Der mechanische Anschlag kann so gestaltet sein, dass das Messgerät in zwei unterschiedlichen, um 180° gedrehten Orientierungen mit dem Mehrzweckschnittstellensockel zu verbinden ist.

Bei dem Mehrzweckschnittstellensockel hat in einer Variante die zweite Signalübergabestelle eine erste und eine zweite Kontaktstelle mit jeweils mehreren Kontakten. Diese Kontakte können elektrische (ohmsche) und oder lichtwellenleitergestützte Verbinder oder Kontakte sein. Dabei sind die erste und die zweite Kontaktstelle voneinander beabstandet, und die mehreren Kontakte der einen Kontaktstelle bezogen auf eine Mitte zwischen den beiden Kontaktstellen punktsymmetrisch zu den mehreren Kontakten der anderen Kontaktstelle angeordnet. Das Messgerät hat gegengleiche erste und eine zweite Kontaktstellen. Damit ist das Verbinden des Messgeräts mit dem Mehrzweckschnittstellensockel in zwei unterschiedlichen, um 180° gedrehten Orientierungen sehr komfortabel möglich. Durch die beiden gegengleichen ersten und zweiten Kontaktstellen werden die Signal-/Versorgungsspannungskontakte parallel bereitgestellt. Dies verringert auch Fehler der Anordnung im Betrieb, da jede Signal-übergabe durch diese Anordnung doppelt erfolgt. Leitungen, über welche größere Ströme geführt werden (zum Beispiel Energieversorgung), werden dabei bei Bedarf über 2 x 2, 2 x 3 oder mehr einzelne Kontakte übergeben.

Dieser Mehrzweckschnittstellensockel hat zur Verbindung mit dem Messgerät in einer Ausführungsform als Kontaktübergabe auf einer Seite (Messgerät oder Sockel) eine gedruckte Leiterplatte mit vergoldeten Kontaktstellen, und auf einer korrespondierenden Seite (Sockel oder Messgerät) eine Leiterplatte mit Kontaktstiften oder Kontaktfedern. Auch Mischformen zwischen dieser Aufteilung sind möglich. Die Kontaktstifte oder Kontaktfedern können SMTgelötet (SMT = Oberflächen-Montage-Technik), genietet, auf- oder eingelötet sein; auch können die Kontaktstifte federnd ausgestaltet sein. Die gedruckten Leiterplatten übergeben / übernehmen die Signal- und Versorgungsleitungen auf/von die/den Kontaktstifte oder Kontaktfedern und Kontaktstellen. In einer bevorzugten Variante befinden sich die federnden Kontakte an der Unterseite des Messgeräts und die Kontaktflächen an der Oberseite des Mehrzweckschnittstellensockels.

Darüber hinaus hat der Mehrzweckschnittstellensockel eine die Signalübergabestelle und die Fluidübergabestelle umgebende Dichtungsanordnung, die mit einer seitlichen oder unteren Kontaktfläche des Messgeräts korrespondiert. Diese Dichtungsanordnung kann als Ringdichtung ausgestaltet sein, die bei angebautem Messgerät Kühlmittel und Schmutz von der Schnittstelle abhält.

Wenn das Messgerät nicht mit dem Mehrzweckschnittstellensockel verbunden ist, bildet die jeweilige Leiterplatte mit ihren freiliegenden elektrischen / faseroptischen Kontakten die äußere Haut des Messgeräts und des Mehrzweckschnittstellensockels im Bereich der Übergabestelle. Dazu ist die Leiterplatte ohne Durchbrüche gestaltet und fluid-/staubdicht in das Sockel- bzw. Messgerätegehäuse einzubauen. So kann bei nicht an dem Mehrzweckschnittstellensockel angedocktem Messgerät kein Staub, Kühl-/Schmiermittel ins Gehäuseinnere des Messgeräts oder des Mehrzweckschnittstellensockels gelangen.

Die vorstehend erwähnten Federkontaktstifte haben bewegliche Teile mit Spalten. Sollten bei freiliegender Übergabestelle des Mehrzweckschnittstellensockels, also bei nicht angedocktem Messgerät, Späne, Staub oder Kühlmittel auf die Schnittstelle gelangen, ist es nahezu unmöglich, die Kontaktstifte mit den Spalten in ihrer Halterung zu reinigen. Um ein Eindringen solcher Verunreinigungen zu verhindern, ist in unterschiedlichen Varianten vorgesehen, mit Hilfe einer oder mehrerer Dichtmembranen abgedichtete Kontaktstellen zu bilden. Die so gestalteten Schnittstellen bilden mit dem Gehäuse des Messgeräts / des Mehrzweckschnittstellensockels jeweils eine praktisch nahezu geschlossene Oberfläche, die sich leicht reinigen lässt.

So können die beiden Kontaktstellen an dem Mehrzweckschnittstellensockel und dem Messgerät nach außen abgedichtet gestaltet sein. In einer Variante sind dazu SMT-lötbare Federkontaktstift-Blöcke vergesehen. In einer anderen Variante sind SMT-gelötete oder genietete Kontaktfedern eingesetzt. Die Kontakte sind mittels einer flexiblen Membran abgedichtet, in welche die einzelnen Kontakte eingebettet sind, oder welche die einzelnen Kontakte seitlich dicht umschließt. Damit ist die Übergabe-Schnittstelle bei nicht angebautem Messgerät gegen eindringendes Kühlmittel abgedichtet. Bei den mittels der flexiblen Membran abgedichteten Kontakten (vorzugsweise am Messgerät) kann kein Schmier- oder Kühlmittel in die Zwischenräume der Kontaktstiftteile gelangen.

Diese Anordnungen lassen sich zum Reinigen leicht mit gereinigter - staub- und ölfreier - Druckluft über eine Düse abblasen oder mit einem Tuch abwischen, sollte vor der Montage des Messgeräts an dem Mehrzweckschnittstellensockel z.B. Kühlmittel an die Kontaktstelle gelangt sein.

Die zusätzliche Dichtmembran schützt die Kontakte vor Kühlmittel und erleichtert die Reinigung der elektrischen Schnittstelle.

Die oben erwähnte Abdichtung des Schnittstellenbereichs durch die Dichtungsanordnung (Ringdichtung) ist von der Abdichtung der beiden Kontaktstellen nach außen zu unterscheiden; sie können alternativ oder beide vorgesehen sein.

Der Mehrzweckschnittstellensockel hat in einer Variante eine Pneumatiksteuerung, umfassend Pneumatikkomponenten wie Ventile, Drosseln, Rückschlagventile, Filterkapsel, und/ oder Druckminderer oder dergl., zum Bereitstellen von unter Druck stehendem Fluid für verschiedene Funktionen in der Lichtschrankenanordnung, zum Beispiel die pneumatisch zu betätigenden Schließblenden für den Lichtstrahl in der Lichtschrankenanordnung. Ein Vorteil dieser Variante ist, dass der Mehrzweckschnittstellensockel nur eine einzige Fluidversorgung benötigt. Aus dieser einen Fluidzufuhr werden im Mehrzweckschnittstellensockel die Funktionen Reinigung, Verschlusskolben und Sperrluft für das Lichtschranken-Messsystem über drei Fluidübergabestellen bereitgestellt. In Varianten, bei denen der Mehrzweckschnittstellensockel keine Pneumatikkomponenten enthält, befindet sich die pneumatische Steuerung der Funktionen Reinigung, Verschlusskolben und Sperrluft für das Lichtschranken-Messsystem entweder in dem Lichtschranken-Messsystem oder ist aufstromseitig zu dem Mehrzweckschnittstellensockel. Im ersten Fall ist lediglich eine nur eine einzige Fluidversorgung und eine Fluidübergabestelle im Mehrzweckschnittstellensockel erforderlich. In zweiten Fall hat sind im Mehrzweckschnittstellensockel drei separate Fluidversorgungen für die Funktionen Reinigung, Verschlusskolben und Sperrluft, und drei korrespondierende Fluidübergabestellen vorgesehen.

In einer weiteren Variante ist zusätzlich zur oder anstelle der Pneumatiksteuerung eine elektronische Steuerung zum Bereitstellen von Steuersignalen für den Betrieb der Lichtschrankenanordnung, zum Empfangen von Messsignalen von der Lichtschrankenanordnung, zum Abgeben von Messsignalen in einem Signalübertragungsmedium an die Maschinensteuerung, und/ oder zum Bereitstellen von Steuersignalen für die Pneumatiksteuerung in dem Mehrzweckschnittstellensockel vorhanden. Dabei kann der Mehrzweckschnittstellensockel unterschiedliche Anschlüsse an einer seiner Seiten und/oder Bodenfläche haben. Zum Maschinentisch hin kann in einer weiteren Variante der Mehrzweckschnittstellensockel mit einer Dichtungsanordnung versehen sein. Damit ist der Mehrzweckschnittstellensockel ohne Probleme auf dem Maschinentisch montierbar und kann dort während des Fertigungsbetriebes auch verbleiben. Mit dem Mehrzweckschnittstellensockel ist die Installation des Messgeräts auf einer einem Maschinentisch, einer Palette oder im Arbeitsraum einer CNC-Maschine bei vielen Anwendungen sehr einfach möglich.

Der Mehrzweckschnittstellensockel dient als Vorinstallation an der Werkzeugmaschine und stellt eine einfache Vorbereitungsmöglichkeit für Werkzeugmaschinen dar. Der Mehrzweckschnittstellensockel kann vor der Inbetriebnahme der Werkzeugmaschine bereits komplett montiert und an die Maschinensteuerung angeschlossen in der Werkzeugmaschine installiert sein. Trotz der im Maschinenraum herrschenden sehr rauen Umgebungsbedingungen ist so das Messgerät durch den Anwender einfach einzusetzen und unmittelbar in Betrieb zu nehmen. So ist es möglich, ein Messgerät kundenseitig zu adaptieren, ohne die Dichtheit der Anordnung gefährdet ist, und ohne dass auf die Abdichtung des Maschinentisches geachtet werden muss. Das Messsystem ist durch den Mehrzweckschnittstellensockel vom Anwender schnell und einfach auszutauschen.

In einer weiteren Variante wird das Messgerät durch den Mehrzweckschnittstellensockel über eine Pneumatikleitung versorgt, die auch eine am Messgerät oder dem Mehrzweckschnittstellensockel befindliche Blasdüse zur Werkzeugreinigung im Fall einer Lasermessstrecke direkt über die Schnittstelle versorgt. Somit ist keine zusätzliche externe Leitung erforderlich. Außerdem kann der Mehrzweckschnittstellensockel anstelle der Laser-Messstrecke auch einen taktilen Werkzeugtaster ohne oder mit Blasdüse zur Messflächenreinigung aufnehmen.

Insbesondere bei einer Variante des Messgeräts, bei dem die Lasermessstrecke durch pneumatisch betriebene Verschlusskolben oder Schließblenden gegen Verschmutzen geschützt ist, wird die Ventilentlüftung und/oder Abluft der Verschlusskolben der Blasdüse zur Werkzeugreinigung zugeführt. Damit ist kein zusätzlicher Abluftkanal oder eine zusätzliche Abluftöffnung am Messgerät oder dem Mehrzweckschnittstellensockel notwendig. So wird vorteilhaft vermieden, dass das im durch Nebel, Fluide oder Feststoffe stark belasteten Bearbeitungsraum von Werkzeugmaschinen befindliche Messgerät oder der Mehrzweckschnittstellensockel mit einer Abluftöffnung versehen sein muss. Vielmehr ist das Pneumatik-Steuerungs-System durch ein in der Blasdüse zur Werkzeugreinigung eingebautes Rückschlagventil gegen eindringendes Schmier- oder Kühlmittel wirksam geschützt.

In einer anderen Variante wird eine die elektrische Verbindung aus dem Maschinenraum heraus zur Maschinensteuerung herstellende elektrische Leitung so ausgelegt, dass die Abluft darüber entweichen kann. Dies kann zum Beispiel durch einen in das Kabel eingearbeiteten dünnen Luftschlauch geschehen.

Eine die (i) elektrische und / oder lichtwellenleiter-optische Signalübergabestelle und (ii) Fluidübergabestelle und die (iii) Dichtungsanordnung übergreifende separate Abdeckplatte kann zum Schutz der Schnittstelle vorgesehen sein, wenn kein Messgerät an dem Mehrzweckschnittstellensockel angebracht ist.

Die Pneumatiksteuerung kann zur Versorgung der Fluid-Blas-Einrichtung ein erstes, elektromagnetisch betätigbares Schaltventil aufweisen, das mit elektrischen Betätigungssignalen zu beaufschlagen ist, wobei das erste, elektromagnetisch betätigbare Schaltventil gesteuert Druckluft an einen oder mehrere Luftauslässe der Fluid-Blas-Einrichtung zum Beispiel zur Reinigung eines zu vermessenden Werkzeuges liefern kann. Dieses Schaltventil kann eine elektromagnetisch betätigte Durchlassstellung, in der die Blasluftauslässe mit Druckluft beschickt werden, und eine federbelastete Sperrstellung haben, in der keine Druckluft zu den Blasluftauslässen gelangt.

Die Pneumatiksteuerung kann zum Zuführen von Sperrluft im Bereich des Messstrahls ein mit Betätigungssignalen zu beaufschlagendes, zweites, elektromagnetisch betätigbares Schaltventil aufweisen. Dieses Schaltventil kann gesteuert Druckluft an den Durchtrittsöffnungen des Messstrahls austreten lassen, damit keine Fremdkörper in dem Strahlengang des (Laser-)Lichtstrahls gelangen können. Das zweite, elektromagnetisch betätigbare Schaltventil kann eine federbelastete Sperrstellung, in der keine oder eine mit geringem Druck belastete, oder einem geringeren Volumenstrom bereitgestellte Druckluft an Durchtrittsöffnungen des Messstrahls austreten kann, und eine elektromagnetisch betätigte Durchlassstellung haben, in der Druckluft mit vergleichsweise höherem Druck oder einem vergleichsweise höheren Volumenstrom bereitgestellt an den Durchtrittsöffnungen des Messstrahls austreten kann.

Die Pneumatiksteuerung kann zur Beschickung der zumindest einen Schutz-/Schließeinrichtung mit Fluid ein mit Betätigungssignalen zu beaufschlagendes, drittes, elektromagnetisch betätigbares Schaltventil aufweisen. In der Schutz-/Schließeinrichtung können die Schließblenden oder Verschlusskolben angeordnet sein. Dieses elektromagnetisch betätigbare Schaltventil liefert gesteuert Druckluft an einen oder mehrere Schieber. Dieses Schaltventil kann eine federbelastete Sperrstellung, in der keine Druckluft zu den Schiebern an dem Lichtsenderteil oder dem Lichtempfängerteil der Lichtschrankenanordnung gelangt, so dass kein Mess-Lichtstrahl durchtreten kann, und eine elektromagnetisch betätigte Durchlassstellung haben, in der die Schieber mit Druckluft beschickt werden, so dass der Mess-Lichtstrahl durchtreten kann.

In einer weiteren Variante ist die zumindest eine Schutz-/Schließeinrichtung der Lichtstrecke lösbar mit der Lasermessstrecke verbunden. Dazu ist jeweils ein den pneumatisch betriebenen Verschlusskolben in einem eine Lichtstrahl-Durchlassöffnung enthaltenden Vorsatz angeordnet. Der Vorsatz ist mit einer Dreh-, Schiebe-, oder Rast-Verbindung ausgestattet, die dazu eingerichtet ist, mit einer korrespondierenden Verbindung an der Tragestruktur der Lasermessstrecke zusammenzuwirken. In einer Variante des Vorsatzes sind der pneumatisch betriebene Verschlusskolben und die Lichtstrahl-Durchlassöffnung so angeordnet, dass im montierten Zustand des Vorsatzes und der Lasermessstrecke an dem Mehrzweckschnittstellensockel die Lichtstrahl-Durchlassöffnung einem freien Ende (=oberen Ende) des jeweiligen Schenkels der Tragestruktur der Lasermessstrecke näher ist als dem (=unteren Ende) Mehrzweckschnittstellensockel. Dabei hat in einer Variante des Vorsatzes dieser an seiner dem oberen Ende näheren Seite eine geneigte Wand. Damit vergrößert sich die mögliche Eintauchtiefe eines in einer Spindel der Werkzeugmaschine aufgenommenen Werkzeugs gegenüber einem quaderförmigen Aufbau des Vorsatzes oder gegenüber einer aus im Wesentlichen rechtwinkligen Teilkörpern gebildeten Tragestruktur der Lasermessstrecke mit integrierten Verschlusskolben.

In einer Variante ist der Vorsatz mit einer Dreh-Rast-Verbindung ausgestattet, bei der ein die die Lichtstrahl-Durchlassöffnung umgebender Bund einen ringförmigen, radial nach außen ragenden Kragen mit Unterbrechungen entlang seines Umfangs aufweist. Der Kragen mit seinen Unterbrechungen ist so bemessen, dass er in eine gegengleich geformte Öffnung in dem jeweiligen Schenkel der Tragestruktur der Lasermessstrecke durch Einführen und Verdrehen abdichtend einrasten kann. Die Dreh-Rast-Verbindung des Vorsatzes an der Tragestruktur ist in beide Drehrichtungen lösbar oder verriegelbar. Dies erlaubt die De-/Montage des Vorsatzes an der Tragestruktur der Lasermessstrecke auch nahe einer Störkontur, zum Beispiel einer Wand des Arbeitsraums.

Zwischen dem Verschlusskolben und der Tragestruktur der Lasermessstrecke befindet sich eine Dichtung. Diese Dichtung umgibt einerseits die Lichtstrahl-Durchlassöffnung des Vorsatzes und andererseits radial versetzt zu der Lichtstrahl-Durchlassöffnung einen Pneumatikanschluss für das Betriebsmedium (zum Beispiel Druckluft).

Der Verschlusskolben hat einen Zapfen und ist mit einer Federanordnung belastet, so dass der Zapfen in der Ruhestellung des Verschlusskolbens die Lichtstrahl-Durchlassöffnung des Vorsatzes quer zur Orientierung der Lichtstrahl-Durchlassöffnung verschließt. Durch den Pneumatikanschluss gelangt das Betriebsmedium in eine Arbeitskammer, die den längsverschieblich geführten Verschlusskolben umgibt. Der Verschlusskolben und / oder die Zylinderbohrung ist in einer Variante zum Verschleißschutz mit einer beschichteten / vergüteten Lauffläche versehen. Der Verschlusskolben hat einen die Arbeitskammer zu der Federanordung hin abdichtenden Ringbund. Dazu ist eine Kolbendichtung aus Dichtungsgummi vorgesehen. Damit der Verschlusskolben die Lichtstrahl-Durchlassöffnung des Vorsatzes freigibt, wird die Arbeitskammer mit dem Betriebsmedium beschickt. Dadurch wird der Verschlusskolben gegen die Kraft der Federanordung verschoben, so dass der Zapfen die Lichtstrahl-Durchlassöffnung freigibt. Eine die Federanordnung aufnehmende Federkammer ist geschlossen und damit gegen Verschmutzung geschützt. Der Verschlusskolben hat eine Ventilfunktion, über die die Entlüftung der Federkammer während des Öffnens des Kolbens gesteuert wird. Die Luft entweicht über einen Kanal im Kolben und wird der Sperrluft zugeführt. Dieser Kanal ist in Ruhelage der Verschlusskolben verschlossen und wird nach kurzem Verschiebeweg des Verschlusskolbens freigegeben. Beim Verschließen der Lichtstrahl-Durchlassöffnung mit dem Sperrzapfen des Verschlusskolbens wird über diesen Kanal die Federkammer belüftet, sonst würde ein Unterdruck entstehen.

Die zwischen dem Verschlusskolben und der Tragestruktur der Lasermessstrecke befindliche Dichtung ist in einer Variante als Gummiformteil ausgestaltet und übernimmt die Funktionen eines federnden Elementes zum Toleranzausgleich, die Abdichtung gegen Schmutz und/oder die Abdichtung für die Pneumatikübergabe. Des Weiteren hat in einer weiteren Variante die Dichtung Rastelemente zum Festlegen der Drehposition des Vorsatzes in seiner Gebrauchslage. Durch die Verrastung in der Gebrauchslage ist auch bei schlechter Zugänglichkeit oder Blindmontage des Vorsatzes eine mittig orientierte Montage der Schmutzblende in dem Vorsatz sichergestellt.

Als Variante eines solchen Rastelements ist ein Steg an dem Gummiformteil angeformt, der dazu vorgesehen ist, in eine in die Gehäusefläche der Tragestruktur eingearbeitete Nut oder Hohlkehle einzugreifen. Als weitere Variante eines solchen Rastelements ist ein Metallzylinder vorgesehen, der durch das hier als Andrückfeder dienende Gummiformteil in die Gehäusenut gedrückt. Dies bewirkt eine deutlichere Verrastung als die vorstehend beschriebene Variante. Eine dritte Variante setzt ein separates federndes Rastelement ein. Hier greift ein einzupressendes Kunststoffformteil oder eine Stanz-Biege-Clip oder eine federbelastete Rastkugel in die in der Gehäusefläche der Tragestruktur eingearbeitete Nut oder Hohlkehle ein.

Die hier vorgestellte Dichtung hat in einer Variante unterschiedliche Querschnittsformen. Dies bewirkt Bereiche mit unterschiedlichem Anpressdruck. Dadurch kann auch bei der asymmetrischen Fixierung des Vorsatzes durch die Dreh-, Schiebe-, oder Rast-Verbindung ein gleichmäßiges Anliegen an der Gehäusefläche der Tragestruktur realisiert werden.

In einer weiteren Variante hat ein Messsystem zur berührungslosen Messung, mit einem einen Lichtsender und einen Lichtempfänger aufweisenden Lichtschranken-Messsystem eine dem Lichtsender und/oder dem Lichtempfänger zugeordnete optische Linsenanordnung zur Formung und Fokussierung eines Lichtstrahls von dem Lichtsender zu dem Lichtempfänger. Die optische Linsenanordnung ist in einer Linsenfassung aufgenommen. Die Linsenfassung hat eine innere und eine äußere, jeweils zylindrische Hülse, wobei die Linsenanordnung in der inneren Hülse eingesetzt ist, die von der äußeren Hülse zumindest teilweise eingefasst ist. Die Linsenfassung ist mit der Linsenanordnung in einer Wandung des Lichtsenders und/oder des Lichtempfängers aufgenommen.

Diese optische Anordnung erlaubt, ein optisches Feedback -APC- dadurch zu erzielen, dass ein Teil der von dem Lichtstrahler erzeugten Lichtleistung auf ein in den Lichtstrahler integriertes Photoelement strahlt, und dieses Photoelement einen zur erzeugten Leistung proportionalen Strom erzeugt. Dieser zur erzeugten Leistung proportionale Strom wird dafür genutzt, den Vorwärtsstrom durch den Lichtstrahler zu regeln. Alternativ fließt ein konstanter Strom -ACC- durch den Lichtstrahler, indem der Vorwärtsstrom auf einem bestimmten Wert gehalten wird.

Als Lichtstrahler dient eine leistungsgeregelte oder leistungsstabilisierte Laserdiode. Deren Licht wird der optischen Linsenanordnung mit axialem Versatz zugeführt. Die¬se optische Linsenanordnung hat zum Beispiel eine sphärische oder asphärische Linse aus Glas oder Kunststoff oder einer Kombination beider Materialien. Die optische Linsenanordnung kann auch ein Licht beugendes Element sein. Die optische Linsenanordnung kollimiert, divergiert oder konvergiert das durchstrahlende Licht. Die Ausbreitung des Lichts wird durch eine Blende beschränkt, welche in die optische Linsenanordnung eingefügt oder dieser nachgeordnet sein kann. Durch die Blende wird eine rotationssymmetrische oder teilweise rotationssymmetrische Intensitätsverteilung oder ein rundes Strahlprofil erreicht. Nach dieser Blen¬de wird das Licht durch eine sphärische oder asphärische Linse aus Glas oder Kunststoff oder einer Kombination beider Materialien, oder durch ein Licht beugendes Element kollimiert, di-vergiert oder auf eine gewünschte Fokusposition fokussiert. Die optische Linsenanordnung kann als singlet, doublet oder triplet ausgelegt sein.

Diese Anordnung bietet in einer Variante eine Montagehülse, die neben der Linsenfixierung auch als Blende für die Begrenzung des Laserstrahls dienen kann. In diese innere Hülse oder Montagehülse können die Linsen kraftfrei oder annähernd kraftfrei eingelegt werden. So legt die innere Hülse die Linsenanordnung geometrisch fest und/oder wirkt als Blende für die Begrenzung des Lichtstrahls. Im Gegensatz zu herkömmlichen Linsenfassungen können mit der hier vorgeschlagenen Lösung die Linsen (auch ohne Klebstoff) spielfrei und sehr zentrisch gefasst werden, wobei wenige zu montierende Teile eine einfache und schnelle Montage durch den Pressvorgang erlauben.

Die innere und/oder die äußere Hülse haben in einer Variante in Längsrichtung verlaufende Schwächungs- und/oder Dehnungszonen. Dabei kann in einer Variante die innere Hülse und/ oder die äußere am Innen- und/oder Außenumfang verteilte, radial nach innen orientierte Pressstellen haben. Dabei sind die Linsen der Linsenanordnung in der inneren Hülse eingelegt. Dabei sind der Innenquerschnitt der äußeren Hülse und der Außenquerschnitt der inneren Hülse so zueinander dimensioniert, dass die äußere Hülse die innere Hülse in radialer Richtung gegen die Linsen drängt. In einer weiteren Variante mit mehreren Linsen kann auch für jede der mehreren Linsen eine eigene innere Hülse vorgesehen sein. Die Anordnung der Linsen zueinander wird in dieser Variante durch die Aufnahme der jeweiligen inneren Hülse in der äußeren Hülse bestimmt.

Die innenliegenden Pressstellen oder -wulste drücken gegen den Linsenaußendurchmesser und bilden durch deren plastische Verformung eine abdichtende Klemmung der Linsenaußenfläche. Diese einfach zu montierende Anordnung kommt gegenüber herkömmlichen Linsenfassungen ohne Schrauben oder Klemmringe aus. Die beiden Hülsen erfordern kein Kleben; es handelt sich um einfache zu fertigende Teile, die Gesamtanordnung benötigt nur eine geringe Teileanzahl.

Die geometrische Gestaltung der inneren Hülse und die Materialauswahl beeinflussen die auf die Linsen wirkenden Kräfte. Dabei werden Spannungen in den Glaskörper eingeleitet, die ausreichend hoch sind, um eine zuverlässige Fixierung und ggf. Abdichtung zu erreichen ohne zu Abplatzungen an den Linsen oder zu optischen Verzeichnungen zu führen.

Um die Fertigungstoleranzen der einzelnen Bauteile ausgleichen zu können und bei vielfältigsten Toleranzkonstellationen die Presskräfte gegen die Linsen und gegen die äußere Hülse im gewünschten Bereich zu halten, ist ein Material zu wählen, welches sich bei der Montage plastisch verformt und dabei trotzdem noch genügend Restspannung aufrecht erhält.

Die äußere Hülse kann an einem Ende wenigstens eine Einführfase, vorzugsweise mit einem Fasenwinkel von 2° - 15°, besonders bevorzugt mit einem Fasenwinkel von 4° - 10° aufweisen. Die innere Hülse (Montagehülse) verengt sich bei einem Darüber-Schieben oder Aufpressen der äußeren Hülse, die auch als Gehäuse für die gesamte optische Anordnung dienen kann. Diese ,sanft geneigten' Einführfasen erleichtern das Darüber-Schieben der Hülse über die Linsen. Dadurch werden die Linsen von außen geklemmt.

Die innere und/oder die äußere Hülse kann aus Material unterschiedlicher Festigkeit oder Duktilität mit abweichenden Anteilen plastischer und elastischer Verformbarkeit wie Aluminium, Kunststoff, Buntmetall, Blei, Formgedächtnislegierung, jeweils in unterschiedlichen Härtegraden gebildet sein. Sowohl die innere(n) als auch die äußere Hülse kann zur Dimensionierung und zur Verlaufsmodellierung der Festigkeit, Elastizität und Verformbarkeit mit Schwächungsstellen (Vertiefungen, Ausnehmungen, Schlitze, Öffnungen, oder dergl.) versehen sein. Zwischen den Linsen und der inneren Hülse und/oder der inneren und der äußeren Hülse, oder zwischen der Linse und der äußeren Hülse kann ein zusätzlich eingelegtes Dichtelement aus Gummi oder Kunststoff oder ein Klebstoff eingesetzt sein. Eine Abdichtung zur Linse und zur Außenhülse entsteht durch die Presskräfte der Montagehülse. Ein zusätzlich eingelegtes Dichtelement aus Gummi oder Kunststoffformteil kann hier eine zusätzliche Abdichtung bieten. Schließlich kann zur spielfreien Verpressung anstelle des Dichtelementes ein etwaiger Spalt zwischen der äußeren Hülse und der Linsenanordnung mit einem Kleber aufgefüllt sein. Zusätzlich zur spielfreien Verpressung können die verbleibenden Spalte zur Festigkeitssteigerung und als zusätzliche Abdichtung mit einem Klebstoff aufgefüllt sein.

Die hier vorgestellte Lösung der dem Lichtsender und/oder dem Lichtempfänger zugeordneten optischen Linsenanordnung in der Linsenfassung erlaubt eine präzise, schnelle und prozesssichere Linsenmontage. Dabei kann die mechanische Fixierung der optischen Linsenanordnung in der Linsenfassung und die Abdichtung in einem Arbeitsgang erreicht werden. Insgesamt wird hierdurch eine stabile, spielfreie Montage der optischen Komponenten erreicht, wobei die fertig montierte Anordnung unempfindlich gegen Erschütterungen ist. Die erforderliche geringe Teileanzahl resultiert aus einem Verzicht auf Distanzringe oder eingeschraubte Klemmringe, oder dergleichen.

Weitere Merkmale, Eigenschaften, Vorteile und mögliche Abwandlungen dieses Messsystems werden anhand der nachstehenden Beschreibung erläutert, in der auf die beigefügten Zeichnungen Bezug genommen ist.

### Kurzbeschreibung der Zeichnungen

Fig. 1 zeigt ein Messgerät in Gestalt einer berührungslos messenden Lichtschranke in einer schematischen, seitlichen Darstellung.
Fig. 2 zeigt einen Mehrzweckschnittstellensockel zum Messgerät aus Fig. 1 in einer schematischen Draufsicht-Darstellung.
Fig. 3 zeigt den Mehrzweckschnittstellensockel aus Fig. 2 in einer schematischen, SeitenDarstellung.
Fig. 4a zeigt eine erste Variante einer elektrischen Signalübergabestelle des Mehrzweckschnittstellensockels aus Fig. 2 in einer schematischen, seitlichen Schnitt-Darstellung.
Fig. 4b zeigt diverse Varianten von SMT-Federkontakten in schematischer perspektivischer Darstellung für die zweite Variante aus Fig. 4a.
Fig. 4c zeigt eine zweite Variante einer elektrischen Signalübergabestelle des Mehrzweckschnittstellensockels aus Fig. 2 in einer schematischen, seitlichen Schnitt-Darstellung.
Fig. 4d zeigt eine dritte Variante einer elektrischen Signalübergabestelle des Mehrzweckschnittstellensockels aus Fig. 2 in einer schematischen, seitlichen Schnitt-Darstellung.
Fig. 4e zeigt eine vierte Variante einer elektrischen Signalübergabestelle des Mehrzweckschnittstellensockels aus Fig. 2 in einer schematischen, seitlichen Schnitt-Darstellung.
Fig. 5 zeigt einen Vorsatz mit einem pneumatisch betriebenen Verschlusskolben für das Messgerät in seiner Schließstellung in einer schematischen, seitlichen Schnitt-Darstellung.
Fig. 6 zeigt den Vorsatz mit dem pneumatisch betriebenen Verschlusskolben für das Messgeräts in seiner Durchlassstellung in einer schematischen, seitlichen Schnitt-Darstellung.
Fig. 7 zeigt den Vorsatz aus Fig. 5 in einer schematischen Draufsicht-Darstellung. Die Fig. 5 und 6 sind Schnittansichten durch den Vorsatz der Fig. 7 längs der Linie A-A in der Fig. 7.
Fig. 8 veranschaulicht eine Variante eines Rastelements für den Vorsatz an dem Tragelement.
Fig. 9 veranschaulicht eine erste Variante einer Linsenfassung in einem Schenkel einer Tragestruktur.
Fig. 10 veranschaulicht eine zweite Variante einer Linsenfassung.

### Detaillierte Beschreibung des Messsystems

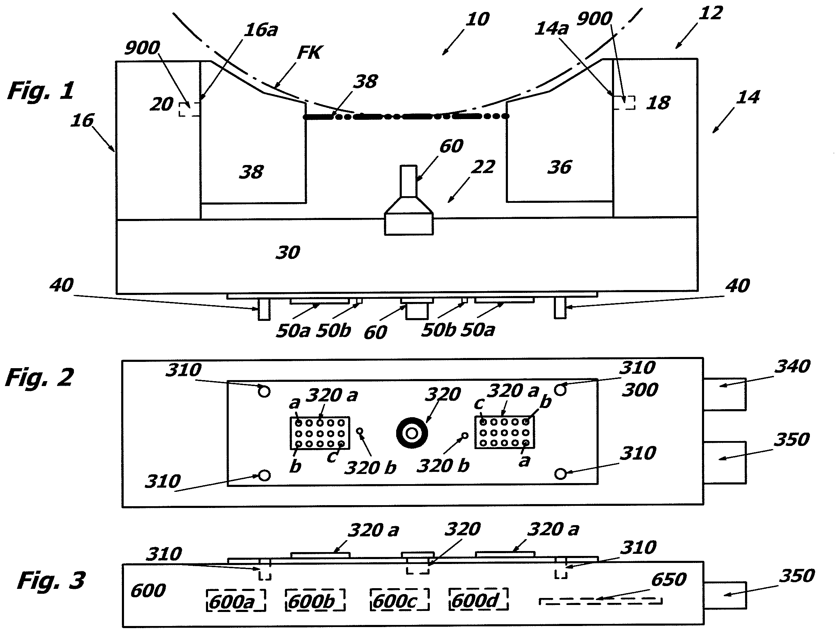

Fig. 1 zeigt ein Messgerät 10 für berührungslose Messung an stehenden und rotierenden Werkzeugen in einer Werkzeugmaschine. Bei der Werkzeugmaschine kann es sich zum Beispiel um eine Fräs-Drehmaschine oder um eine Dreh-Fräsmaschine handeln, in der Werkzeuge zur Span abhebenden oder zur Material abtragenden Bearbeitung eingespannt sind. Stehende Werkzeuge sind dabei zum Beispiel Wendeschneidplatten zur Drehbearbeitung und rotierende Werkzeuge sind dabei zum Beispiel Bohrer oder Fräser.

Um beide Arten von Werkzeugen mit hoher Präzision (zum Beispiel etwa 1 µm oder höher) zu vermessen, ist das Messgerät 10 mit einer Lichtschrankenanordnung 12 zur Positionsbestimmung eines (nicht gezeigten) Werkzeuges oder zur Bestimmung der längsten Schneide eines (nicht gezeigten) rotierenden Werkzeuges in der Werkzeugmaschine ausgestattet.

Bei einem taktil messenden Messgerät wird zu unterschiedlichen Messaufgaben das Werkzeug durch die Werkzeugmaschine an einen Taststift des Messgeräts herangefahren oder von diesem weg verfahren. Nachstehend wird eine Lichtschrankenanordnung 12 und deren Aspekte ausführlich erläutert. Eine Reihe der Anspekte, die sich nicht auf die Besonderheiten einer Lichtstrecke beziehen, gelten jedoch auch bei taktil messenden Messgeräten.

Die Lichtschrankenanordnung 12 ist dabei in dem Messgerät (Lichtschranken-Messsystem) 10 in einen Lichtsenderteil 14 und einen Lichtempfängerteil 16 aufgeteilt, die jeweils einem Schenkel 18, 20 einer im Wesentlichen U-förmigen Tragestruktur 22 des Messgeräts 10 zugeordnet sind. Wie in Fig. 1 gezeigt ist, befinden sich der Lichtsenderteil 14 und der Lichtempfängerteil 16 jeweils in einem Schenkel 18, 20 der U-förmigen Tragestruktur 22. Der Lichtsenderteil 14 und der Lichtempfängerteil 16 sind einander zugewandt und durch eine jeweilige Durchtrittsöffnung 14a, 16a (in Fig. 1 nicht sichtbar dargestellt) gelangt ein Lichtstrahl 24, der im vorliegenden Beispiel ein Laserstrahl ist, vom Lichtsenderteil 14 zu dem Lichtempfängerteil 16. Die im Wesentlichen U-förmige Tragestruktur 22 des Messgeräts 10 ist aus mehreren quaderförmigen Abschnitten zusammengefügt.

Zur Positionsbestimmung eines Werkzeuges oder zur Bestimmung der längsten Schneide eines rotierenden Werkzeuges in der Werkzeugmaschine wird nach einer (von mehreren) Messvorschrift das drehantreibbare Werkzeug so in dem Laserlicht-Messstrahl 24 der Lichtschrankenanordnung 12 positioniert, dass dessen Strahlengang durch das Werkzeug unterbrochen wird. Anschließend wird das Werkzeug relativ zu dem Messstrahl 24 mit einer möglichst konstanten Geschwindigkeit von diesem weg bewegt. Dabei wird das Werkzeug zu einer Position bewegt, in welcher der Messstrahl 24 von dem Werkzeug nicht mehr unterbrochen wird. Alternativ dazu kann die Messung auch drückend erfolgen; hierbei befindet sich das rotierende Werkzeug außerhalb des Messstrahls 24 und erzeugt ein Messsignal, sobald der Messstrahl 24 abgeschattet ist.

Im Innern des Gehäuses des Lichtempfängerteils 16 ist eine - nicht weiter veranschaulichte - Signalelektronikschaltung zur Signalformung und Signalweiterleitung an eine Maschinensteuerung der Werkzeugmaschine aufgenommen. Die Signalelektronikschaltung dient dazu, Messsignale von der Lichtschrankenanordnung 12 zu empfangen und an die - nicht weiter veranschaulichte - Maschinensteuerung weiter zu leiten.

In einem Verbindungsblock 30 zwischen den beiden Schenkeln 18, 20 der U-förmigen Tragestruktur 22 sind pneumatische Verbindungen zu den mit Druckluft zu versorgenden Komponenten des Messsystems 10 ausgebildet.

Um mit der Maschinensteuerung der Werkzeugmaschine zu kommunizieren, also auf Anforderung von der Maschinensteuerung Messsignale von der Lichtschrankenanordnung 12 an die Maschinensteuerung zu senden und für die Messung das Messsystem elektrisch und pneumatisch zu steuern, ist ein Mehrzweckschnittstellensockel 300 vorgesehen, der in Fig. 2 veranschaulicht ist.

Dieser Mehrzweckschnittstellensockel 300 hat einen mit einem Gegenanschlag an dem Messgerät 10 korrespondierenden mechanischen Anschlag 310 zur Aufnahme und wiederholgenauen Platzierung des Messgeräts an dem Mehrzweckschnittstellensockel 300. In dieser Variante ist der Anschlag 310 durch an seiner Oberseite vier rechtwinklig zueinander angeordnete Aufnahmen 310 für am Boden des Messgeräts 10 befindliche Zapfen 40 gebildet.

Dieser Mehrzweckschnittstellensockel 300 hat zwei mit ersten Signalübergabestellen 50a, 50b an dem Lichtschranken-Messsystem korrespondierende zweite Signalübergabestellen 320a, 320b. Dabei sind die Signalübergabestellen 50a, 320a elektrische Kontakte und die Signalübergabestellen 50b, 320b Lichtwellenleiter-Kontakte.

Des Weiteren hat dieser Mehrzweckschnittstellensockel 300 eine mit einer ersten Fluidübergabestelle 60 an dem Lichtschranken-Messsystem korrespondierende zweite Fluidübergabestelle 320 an dem Mehrzweckschnittstellensockel 300.

So bildet dieser Mehrzweckschnittstellensockel 300 eine mechanische, eine elektrisch/optische Signal-, und/ oder pneumatische Fluid-Verbindung zwischen der Maschinensteuerung der Werkzeugmaschine und dem Messsystem. Diese Schnittstelle bietet eine mechanisch wiederholgenaue Messgeräteplatzierung.

Die Zapfen 40 können in anderen Varianten auch als vorgespannte Stifte, Passstifte oder Spannstifte ausgestaltet sein. So sind sie in der Lage, kleinere Toleranzen zwischen dem Mehrzweckschnittstellensockel und dem Lichtschranken-Messsystem ausgleichen.

Der mechanische Anschlag ist hier durch seine punktsymmetrische Anordnung der einzelnen Übergabestellen in Bezug auf ein Zentrum (hier ein zentraler Pneumatikanschluss) so gestaltet, dass das Messgerät 10 in zwei unterschiedlichen, um 180° gedrehten Orientierungen mit dem Mehrzweckschnittstellensockel 300 zu verbinden ist.

Bei dem Mehrzweckschnittstellensockel 300 hat in der in den Fig. 2 und 3 gezeigten Variante die zweite Signalübergabestelle eine erste und eine zweite Kontaktstelle 320a mit jeweils mehreren Kontakten a, b, c. Diese Kontakte a, b, c sind elektrische (ohmsche) Kontakte. Darüber hinaus sind - optional - zwei Signalübergabestellen 50b, 320b als Lichtwellenleiter-Kontakte ausgestaltet. Die erste und die zweite Kontaktstelle 320a sind voneinander beabstandet, und die mehreren Kontakte a, b, c der einen Kontaktstelle 320a sind bezogen auf eine Mitte (hier im Zentrum der zweiten Fluidübergabestelle 320) zwischen den beiden Kontaktstellen punktsymmetrisch zu den mehreren Kontakten a, b, c der anderen Kontaktstelle 320a angeordnet.

Das Lichtschranken-Messsystem 10 hat gegengleiche erste und eine zweite Kontaktstellen 50a, 50b. Damit ist das Verbinden des Lichtschranken-Messsystems 10 mit dem Mehrzweckschnittstellensockel 300 in zwei unterschiedlichen, um 180° gedrehten Orientierungen möglich. Dazu werden die Zapfen 40 des Messsystems 10 in die Aufnahmen 310 eingesetzt, so dass die erste und zweite Kontaktstellen 50a, 50b des Messsystems 10 mit den ersten und zweiten Kontaktstellen 320a, 320b des Mehrzweckschnittstellensockels 300 elektrisch bzw. optisch kontaktieren. In einer Ausführung bildet eine Leiterplatte PCB am Messgerät 10 bzw. am Mehrzweckschnittstellensockel 300 jeweils die abdichtende Ebene. Die ersten und zweiten Kontaktstellen 50a, 50b des Messgeräts 10 bzw. des Mehrzweckschnittstellensockels 300 sind auf dieser Leiterplatte PCB aufgelötet. Ein mechanischer Rahmen aus Hartkunststoff 414 fasst die Kontakte ein. Die Leiterplatte PCB hat nicht weiter veranschaulichte Kupferbahnen, mit denen die zusammengehörenden Kontakte der Kontaktstellen zusammengeführt und die elektrischen Signale/Versorgungsspannungen weitergeleitet werden. Die Leiterplatte PCB und eine Trägerplatte oder ein Gehäuseteil 416 wirken zur Abdichtung des Messgeräts 10 bzw. des Mehrzweckschnittstellensockels 300. Diese Lösung ist auch mit Standard-Federkontaktstiften oder solchen Mehrfachblöcken realisierbar.

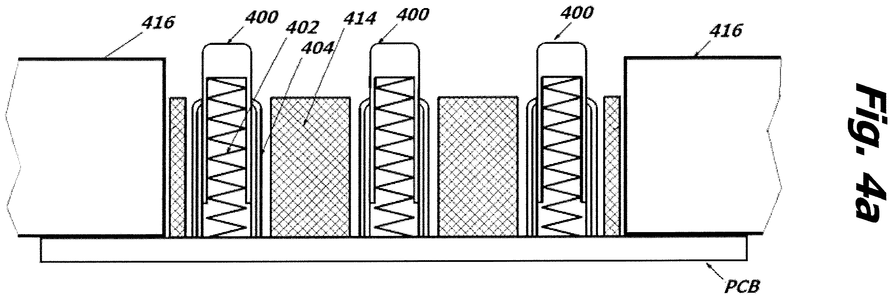

Fig. 4a veranschaulicht eine Variante der elektrischen Kontaktstellen. Diese elektrischen Kontaktstellen sind gebildet durch mehrere rohrförmige Kontaktstifte 400, die durch eine Druckfeder 402 vorgespannt in einer Hülse 404 aufgenommen sind. Jeder Kontaktstift 400 hat an seinem freien Ende ein Kontaktstück. Die einzelnen elektrischen Kontaktstifte sind durch ein diese einfassendes Kunststoffformteil 414 voneinander beabstandet und in ihrer Position durch die gedruckte Leiterplatte PCB in dem Gehäuse 416 fixiert.

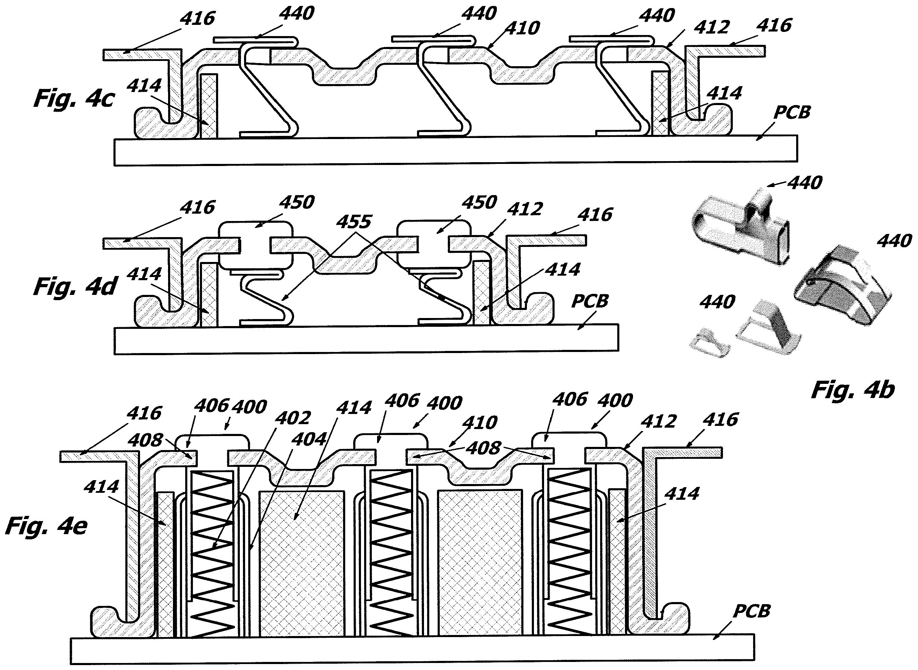

Fig. 4b zeigt unterschiedliche Varianten von SMT-bestückten Kontaktfedern, die anstelle der durch die Druckfeder 402 vorgespannten rohrförmige Kontaktstifte 400 eingesetzt werden können.

Anstatt dieses vorstehend erläuterten Kontaktfelds zeigt Fig. 4c eine abgedichtete Variante auf Basis von SMT-bestückten in der Seitenansicht etwa z-förmigen Kontaktfedern. Fig. 4d zeigt in das Gummiformteil 410 eingesetzte Kontaktpads 450, die als durchgenietete Kontakte realisiert sind und in dieser Variante über in der Seitenansicht etwa z-förmige Kontaktfedern 455 mit nicht weiter veranschaulichten Kupferbahnen auf der Leiterplatte PCB kontaktieren. Die elektrischen Kontaktstellen sind durch ein Kunststoffformteil 414 eingefasst. Wegen des abdeckenden Gummiformteils 410 lassen sich die elektrischen Kontaktstellen leicht mit Druckluft abblasen. So kann sichergestellt werden, dass sich bei der Montage des Messgeräts 10 auf dem Mehrzweckschnittstellensockel 400 keine Metallspäne, Kühlmitteltropfen, oder dergl. an den Kontaktstellen befinden und den mechanischen Anschlag, die elektrischen Kontaktstellen oder die Fluidübergabestelle beeinträchtigen.

Fig. 4e veranschaulicht eine weitere Variante der elektrischen Kontaktstellen. In dieser Variante sind mehrere Kontaktstifte 400, die durch eine Druckfeder 402 vorgespannt in einer Hülse 404 aufgenommen. Jeder Kontaktstift 400 hat ein pilzförmiges Kontaktstück 406, das eine Einschnürung 408 - ähnlich zu den Kontaktpads 450 der Fig. 4d - aufweist. In dieser Einschnürung 408 ist ein abdeckendes Gummiformteil 410 unter Spannung aufgenommen, das auch die Einschnürungen 408 der anderen Kontaktstifte 400 einfasst. An seinem äußeren Rand 412 ist das Gummiformteil 410 nach unten gebogen. Die elektrischen Kontaktstellen sind so nach außen abgedichtet, so dass nur die pilzförmigen Kontaktstücke 406 freiliegen. Die einzelnen elektrischen Kontaktstellen sind durch ein diese einfassendes Kunststoffformteil 414 voneinander beabstandet und in ihrer Position fixiert. Wegen des abdeckenden Gummiformteils 410 lassen sich die elektrischen Kontaktstellen leicht mit Druckluft abblasen. So befinden sich bei der Montage des Messgeräts 10 auf dem Mehrzweckschnittstellensockel 400 keine störenden Metallspäne, Kühlmitteltropfen, oder dergl. an den Kontaktstellen befinden oder dem mechanischen Anschlag.

Der Mehrzweckschnittstellensockel 300 oder die Tragstruktur 22 des Messsystems 10 hat in einer Variante eine Pneumatiksteuerung 600, umfassend Pneumatikkomponenten wie Ventile 600a, Drosseln oder Druckminderer 600b, Rückschlagventile 600c, Filterkapsel 600d, oder dergl., zum Bereitstellen von unter Druck stehendem Fluid für verschiedene Funktionen in der Lichtschrankenanordnung. Sofern der Mehrzweckschnittstellensockel 300 die Pneumatiksteuerung 600 beinhaltet, ist für jede der pneumatischen Funktionen eine Fluidübergabestelle vorzusehen.

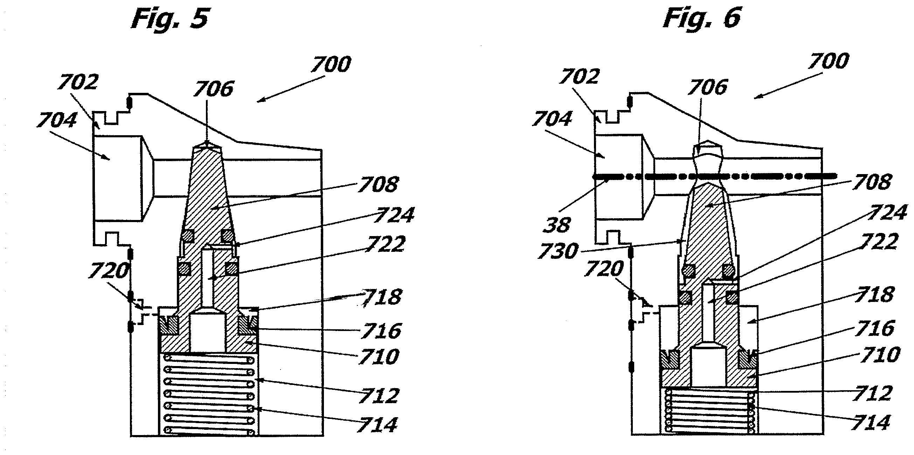

Eine dieser Funktionen ist zum Beispiel eine pneumatisch zu betätigende Schließblende für den Messstrahl 24 in der Lichtschrankenanordnung. Diese Schließblende - für die Details siehe weiter unten die Beschreibung der Fig. 5, 6 - ist jeweils einmal in einem Vorsatz 36, 38 an den beiden Schenkeln 18, 20 der U-förmigen Tragestruktur 22 des Messsystems 10 angebracht (siehe Fig. 1). Eine weitere dieser pneumatischen Funktionen ist eine Fluid-Blas-Einrichtung mit einer Blasdüse 60 (siehe Fig. 1) um gereinigte Druckluft mit etwa 2 bis 10 bar aus der Fluid-Blas-Einrichtung zur Reinigung eines zu vermessenden Werkzeuges und zur Reinigung der Tastfläche einer Messtasteranordnung (im Fall eines Taktil-Messgeräts) zu einem Messort an dem Tastelement und/oder im Bereich des Messstrahls (im Fall eines berührungslos messenden Messgeräts) zuzuführen. Eine weitere pneumatische Funktion ist eine in dem Lichtsenderteil und/ oder dem Lichtempfängerteil der Lichtschrankenanordnung befindliche Luftsperre.

Der Mehrzweckschnittstellensockel 300 hat neben der Pneumatiksteuerung 600 eine elektronische Steuerung 650 zum Bereitstellen von Steuersignalen für den Betrieb der Lichtschrankenanordnung, zum Empfangen von Messsignalen von der Lichtschrankenanordnung, zum Abgeben von Messsignalen in einem Signalübertragungsmedium an die Maschinensteuerung, und/ oder zum Bereitstellen von Steuersignalen für die Pneumatiksteuerung in dem Mehrzweckschnittstellensockel vorhanden. Dabei hat der Mehrzweckschnittstellensockel 300 einen elektrischen Anschluss 340 und einen pneumatischen Anschluss 350. In einer weiteren Variante ist die Laserelektronik im Lasersystem 22 untergebracht. Die elektrische Ansteuerung der pneumatischen Ventile ist im Mehrzweckschnittstellensockel 300 untergebracht. Die elektrische Ansteuerung der pneumatischen Ventile kann auch im Laser-Messsystem 10 untergebracht sein.

In der in Fig. 1-3 veranschaulichten Variante wird das Messsystem 10 durch den Mehrzweckschnittstellensockel 300 über Pneumatikleitungen 320 versorgt, von denen eine auch eine am Messsystem 10 befindliche Blasdüse 60 zur Werkzeugreinigung mit Druckluft über den Mehrzweckschnittstellensockel 300 versorgt. In der in Fig. 3 veranschaulichten Variante sind die pneumatischen Ventile im Mehrzweckschnittstellensockel 300 untergebracht. In diesem Fall sind die drei pneumatischen Übergabestellen ebenfalls um 180° wendbar ausgestaltet.

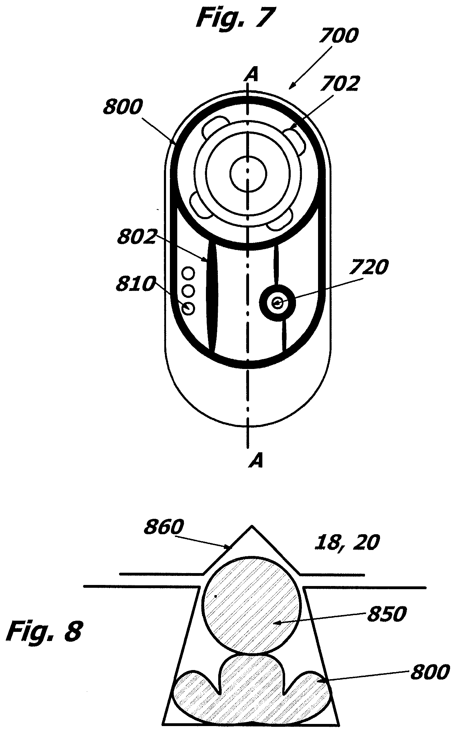

In den Fig. 5 - 7 ist eine Variante von pneumatischen Verschlusskolben oder Schließblenden 700 für das Messsystems veranschaulicht, mit denen die Lasermessstrecke gegen Verschmutzen geschützt ist. In jedem der Vorsätze 36, 38 ist ein solcher Verschlusskolben angeordnet. Dabei zeigt Fig. 5 den Verschlusskolben 700 in seiner Schließstellung und Fig. 6 den Verschlusskolben 700 in seiner Durchlassstellung. Die Fig. 5 und 6 sind Schnittansichten durch den Vorsatz der Fig. 7 längs der Linie A-A in der Fig. 7.

Herkömmliche Schmutzblenden bei derartigen Lasersystemen sind einfach angeschraubt. Abhängig von der Intensität der in der Anwendung vorherrschenden Schmutzbelastung und der Reinheit der Sperrluft, müssen die Schmutzblenden abgenommen und die Strahlaus- / eintrittsstellen gereinigt werden. Dies ist zeitintensiv und erfordert Werkzeug. Die hier vorgestellten Verschlusskolben / Schließblenden 700 mit Dreh- Schiebe- Bajonett etc. Verbindung am Messsystem 10 können werkzeuglos abgenommen und montiert werden.

Diese Schließblenden 700 verhindern, dass während längerer Stillstandszeiten des Messsystems Staub, Späne, Bohrflüssigkeit, oder dergl. in die Durchgangsöffnungen des Messstrahls eindringen könnten. Jeder der Vorsätze 36, 38 hat eine im und gegen den Uhrzeigersinn verrastbare Bajonettkupplung 702, um den jeweiligen Vorsatz 36, 38 an dem entsprechenden Schenkel 18, 20 zu montieren. Diese Bajonettkupplung 702 umgibt eine Durchgangsöffnung 704, durch die der Laserstrahl aus- bzw. eintreten kann. Über diese Durchgangsöffnung wird auch die Sperrluft geführt. Die Durchgangsöffnung 704 hat quer zu ihrer Längserstreckung einen Sperrkanal 706, in dem ein konischer Sperrzapfen 708 längsverschieblich aufgenommen ist. Der Sperrzapfen 708 hat an seinem unteren Ende einen Ringbund 710, gegen den von unten eine in einer nach außen abgeschlossenen Federkammer 712 befindliche Druckfeder 714 wirkt um den Sperrzapfen 708 in seine Schließstellung zu drängen (Fig. 5). Auf seiner Oberseite trägt der Ringbund 710 einen Dichtring 716, der eine Druckkammer 718 begrenzt. Diese Druckkammer 718 hat einen Fluidkanal 720, der mit einem entsprechenden Anschluss an dem entsprechenden Schenkel 18, 20 kommuniziert um aus dem Mehrzweckschnittstellensockel 300 gesteuert Druckluft in die Druckkammer 718 einzuleiten oder aus ihr abzulassen.

Der Sperrzapfen 708 hat einen Zentralkanal 722, der von der Federkammer 712 zu einem seitlichen Auslass 724 reicht. Wenn die Druckluft in der Druckkammer 718 den Sperrzapfen 708 aus seiner Schließstellung in seine Durchlassstellung drängt, würde die Luft in der Federkammer 712 komprimiert. Dies wäre nachteilig. Eine nach außen offene Federkammer 712 birgt die Gefahr, dass Späne, Staub, oder dergl. eindringen. Deshalb wird die Federkammer 712 durch den Sperrzapfen 708 in die Durchgangsöffnung 704 belüftet, wenn der Sperrzapfen 708 seine Schließstellung verlässt. Nach etwa 1 mm Weg verlässt die obere Dichtung den zylindrischen Abschnitt des Sperrkanals 706. Dabei entsteht um den Sperrzapfen 708 ein Ringspalt 730 in dem Sperrkanal 706, so dass die Luft aus der Federkammer 712 in die Durchgangsöffnung 704 entweichen kann. Diese Durchgangsöffnung 704 wird bei geöffneter Schließblende 700 aus dem entsprechenden Schenkel 18, 20 mit Druckluft gespeist, die durch die Durchgangsöffnung 704 entweichen kann und ebenfalls das Eindringen von Spänen, Staub, oder dergl. verhindert. So sind auch die Durchgangsöffnungen 704 des Messstrahls in der Sperrstellung abgeschottet, und in der Durchlassstellung, in der die Schutz-/Schließeinrichtungen an dem Lichtsenderteil oder dem Lichtempfängerteil der Lichtschrankenanordnung mit Druckluft beschickt werden, offen, so dass der Messstrahl an seinen Durchtrittsöffnungen aus/eintreten kann, ohne dass störende Substanzen eindringen können. In einer weiteren Variante ist die Ventilstelle dadurch gebildet, dass ein kurzes zylindrisches Ende des Sperrzapfen 708 mit einem innen liegendem Entlüftungskanal in Ruhelage in einer Dichtung steckt. Nach einem kurzem Weg des Sperrzapfens 708 kommt der Entlüftungskanal aus seiner Ruhelage von der Dichtung frei, so dass die Luft aus der Federkammer 712 in die Durchgangsöffnung 704 entweichen kann. Diese Durchgangsöffnung 704 wird bei geöffneter Schließblende 700 aus dem entsprechenden Schenkel 18, 20 ebenfalls mit Druckluft gespeist, die durch die Durchgangsöffnung 704 entweichen kann und ebenfalls das Eindringen von Spänen, Staub, oder dergl. verhindert.

Zwischen jedem Vorsatz 36, 38 mit dem Verschlusskolben 700 und der an den beiden Schenkeln 18, 20 der U-förmigen Tragestruktur 22 des Messsystems 10 befindet sich eine Dichtung 800. Diese Dichtung 800 umgibt einerseits die Lichtstrahl- und Sperrluft-Durchlassöffnung 704 des Vorsatzes 36, 38 und andererseits radial versetzt zu der Lichtstrahl-Durchlassöffnung 704 den Fluidkanal 720, der mit dem entsprechenden Pneumatikanschluss für die Druckluft kommuniziert. Des Weiteren fasst sie Lichtleiter 810 zur Anzeige von Betriebszuständen des Messsystems 10 ein.

Die Dichtung 800 ist als Gummiformteil ausgestaltet und dient zum Toleranzausgleich, zur Abdichtung gegen Schmutz und zur Abdichtung für die Pneumatikübergabe. Der Toleranzausgleich bezieht sich hier auf unterschiedliche Varianten der Schmutzblendenfixierung, da einige Ausgestaltungen (zum Beispiel Bajonett oder Schwalbenschwanz) ein federndes Element benötigen. Ein Dichtungsabschnitt 802 der Dichtung 800 dient als Rastelement zum Festlegen der Drehposition des Vorsatzes in seiner Gebrauchslage. Dieser Dichtungsabschnitt 802 greift beim Verdrehen des Vorsatzes um die Lichtstrahl-Durchlassöffnung 704 mit dem Bajonettverschlss zu Verrasten in eine - nicht weiter veranschaulichte gegengleich - geformte Nut an den beiden Schenkeln 18, 20 der U-förmigen Tragestruktur 22 ein und legt so die Position des Vorsatzes am jeweiligen Schenkel 18, 20 fest. Durch dieses Eingreifen des Dichtungssteges in die Nut in der Gebrauchslage ist eine korrekte Montage der Schmutzblende in dem Vorsatz sichergestellt.

In Fig. 8 ist als weitere Variante eines solchen Rastelements ein Metallzylinder 850 vorgesehen, der durch das hier als Andrückfeder wirkende Gummiformteil 800 in die Nut 860 an den beiden Schenkeln 18, 20 der U-förmigen Tragestruktur 22 gedrückt wird. Dies bewirkt eine deutlichere Verrastung als die vorstehend beschriebene Variante.

Die hier vorgestellte Dichtung hat in einer Variante unterschiedliche Querschnittsformen. Dies bewirkt Bereiche mit unterschiedlichem Anpressdruck. Dadurch kann auch bei der asymmetrischen Fixierung des Vorsatzes durch die Dreh-, Schiebe-, oder Rast-Verbindung ein gleichmäßiges Anliegen an der Gehäusefläche der Tragestruktur realisiert werden.

Wie in Fig. 1 und in den Fig. 5-7 gezeigt, ist die Lichtstrahl-Durchlassöffnung in dem Vorsatz so angeordnet, dass im montierten Zustand des Vorsatzes an der Lasermessstrecke die Lichtstrahl-Durchlassöffnung an einem freien, oberen Ende des jeweiligen Schenkels der Tragestruktur 22 der Lasermessstrecke 10 näher ist als dem unteren Ende nahe des Mehrzweckschnittstellensockels 300 Der Vorsatz hat an seiner dem oberen Ende näheren Seite eine geneigte Kontur oder Wand 780. Wie in den Fig. 5 und 6 veranschaulicht, verjüngt die geneigte obere Wand durch ihre geknickt verlaufende Kontur den Vorsatz in der Weise, dass ein Werkzeug mit dem in Fig. 1 strichpunktiert angedeuteten Flugkreis FK den Laserstrahl 38 gut erreichen kann.

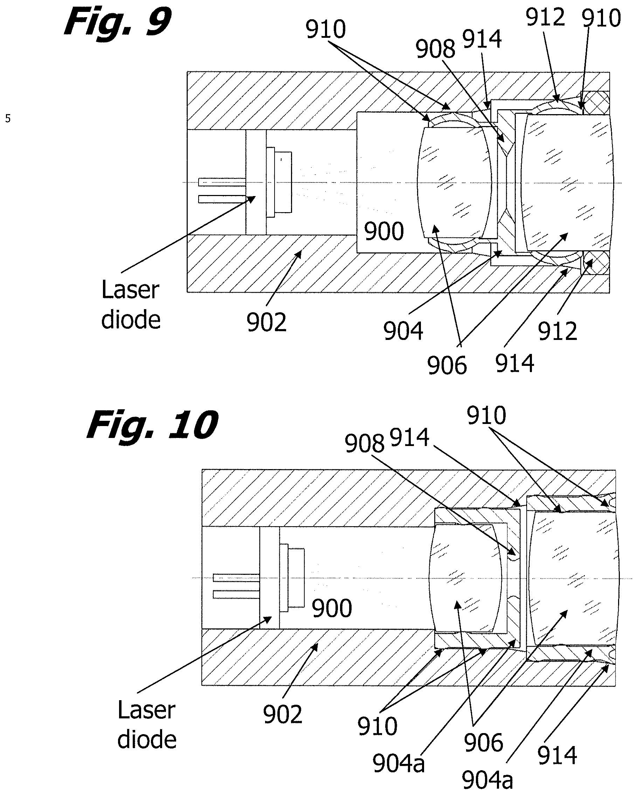

Das Messsystem hat einen nicht weiter veranschaulichten Lichtsender und einen Lichtempfänger in dem Lichtschranken-Messsystem. Dabei ist dem Lichtsender eine optische Linsenanordnung zur Formung und Fokussierung des (Laser-)Lichtstrahls von dem Lichtsender zu dem Lichtempfänger zugeordnet. Der Lichtempfänger ist hier ohne optische Linsenanordnung ausgestaltet; er hat lediglich ein Schutzglas und eine Lochblende. In Fig. 9 ist eine von mehreren Varianten gezeigt, wie die optische Linsenanordnung in einer Linsenfassung 900 aufgenommen ist. Die Linsenfassung 900 hat eine äußere zylindrische Hülse 902 und eine innere zylindrische Hülse 904. Die Linsenanordnung 906 ist in der inneren Hülse 904 eingesetzt, die von der äußeren 902 Hülse eingefasst ist. Die Linsenfassung 900 mit der Linsenanordnung ist in einer Wandung des Lichtsenders aufgenommen. Im Lichtempfänger ist anstelle der Linsen eine optisch nicht wirksame Schutzscheibe eingesetzt. Die innere Hülse 904 legt die Linsenanordnung 906 geometrisch fest. Sie hat auch eine Blende 908 für die Begrenzung des Lichtstrahls.

Bei der in Fig. 9 veranschaulichten Variante ist die äußere Hülse 902 relativ zur inneren Hülse 904 starr und formbeständig, während die innere Hülse 904 elastisch oder plastisch verformt wird, wenn sie in die äußere Hülse 902 eingebracht wird. Dazu sind die Einfassungen der Linsen bombiert gestaltet, so dass ein im Querschnitt konvex bogenförmiger Ring die jeweilige Linse nahe an ihren Kanten einspannt. In seiner Mitte hat der Ring seinen maximalen Durchmesser, mit dem er gegen die Innenwandung der äußeren Hülse 902 drängt. Durch die Bombierung der Einfassung ist die innere Hülse 904 verformbar. Damit sind Schwächungs- / Dehnungszonen 910, 912 realisiert, die als an der inneren Hülse und/oder der äußeren Hülse am Innen- und Außenumfang verteilte, radial nach außen oder innen orientierte Pressstellen gestaltet sind.

Die Linsen der Linsenanordnung sind in der inneren Hülse 904 eingelegt. Der Innenquerschnitt der äußeren Hülse 902 und der Außenquerschnitt der inneren Hülse 904 sind so zueinander dimensioniert, dass die äußere Hülse die innere Hülse in radialer Richtung gegen die Linsen drängt.

Fig. 10 veranschaulicht eine Variante, bei der anstelle der separaten Dichtung eine an die innere Hülse angeformte Dichtlippe vorgesehen ist. In dieser Variante hat jede Linse der Linsenanordnung 906 eine eigene Innenhülse 904a, 904b. In diesem Fall bestimmt die räumliche Anordnung der Linsen in der Außenhülse deren Position zueinander. Die Blende 908 für die Begrenzung des Lichtstrahls kann auch separat in die Außenhülse gesteckt sein, oder Teil einer der Innenhülsen sein.

Die äußere Hülse 902 hat Einführfasen 914 mit einem Fasenwinkel von etwa 8 °. Dies erleichtert das Überschieben der äußeren über die innere Hülse. Die innere und die äußere Hülse sind in der gezeigten Variante aus Kunststoff-Material unterschiedlicher Festigkeit oder Duktilität mit abweichenden Anteilen plastischer und elastischer Verformbarkeit gebildet. Anstelle des Kunststoffs kann auch Aluminium oder anderes Material verwendet werden. In einer weiteren Variante ist zwischen den Linsen und der inneren Hülse und zwischen der inneren und der äußeren Hülse, oder zwischen einer oder beiden Linsen und der äußeren Hülse 902 ein zusätzlich eingelegtes Dichtelement 916 aus Gummi oder Kunststoff, oder ein Klebstoff vorgesehen.

## Patentansprüche

1. Ein berührungslos messendes Messsystem mit
(i) einem einen Lichtsender (14) und einen Lichtempfänger (16) aufweisenden berührungslos messenden Messgerät (10) zur Positionsbestimmung eines Werkzeuges oder zur Bestimmung der längsten Schneide eines rotierenden Werkzeuges in einer Werkzeugmaschine, und mit
(ii) einem Mehrzweckschnittstellensockel (300) zur Aufnahme und zum Anschluss des Messgeräts (10),
wobei der Mehrzweckschnittstellensockel (300) folgende Merkmale aufweist:
- wenigstens einen mit einem Gegenanschlag an dem Messgerät (10) korrespondierenden mechanischen Anschlag (310) zur Aufnahme und wiederholgenauen Platzierung des Messgeräts (10) an dem Mehrzweckschnittstellensockel (300), wobei der Anschlag (310) an dem Mehrzweckschnittstellensockel (300) dazu eingerichtet ist, mit dem Gegenanschlag zu korrespondieren, der in einem Verbindungsblock (30) zwischen zwei Schenkeln (18, 20) einer U-förmigen Tragestruktur (22) angeordnet ist, und in den zwei Schenkeln (18, 20) jeweils der Lichtsender (14) und der Lichtempfänger (16) des Messgeräts (10) angeordnet sind;
- wenigstens eine mit einer ersten Signalübergabestelle an dem Messgerät (10) korrespondierende zweite Signalübergabestelle an dem Mehrzweckschnittstellensockel (300), wobei die zweite Signalübergabestelle eine erste und eine zweite Kontaktstelle (320a) mit jeweils mehreren Kontakten aufweist, wobei die erste und die zweite Kontaktstelle voneinander beabstandet sind, und wobei die mehreren Kontakten der einen Kontaktstelle zu einer Mitte punktsymmetrisch zu den mehreren Kontakten der anderen Kontaktstelle angeordnet sind; und
- wenigstens eine mit einer ersten Fluidübergabestelle (60) an dem Messgerät (10) korrespondierende zweite Fluidübergabestelle (320) an dem Mehrzweckschnittstellensockel (300);
- der mechanische Anschlag (310) des Mehrzweckschnittstellensockels (300) ist durch Aufnahmen für am Boden des Messgeräts (10) befindliche Zapfen (40) gebildet; wobei
- die Zapfen (40) des Messsystems (10) in die Aufnahmen einzusetzen sind, so dass Kontaktstellen (50a) der ersten Signalübergabestelle des Messsystems (10) mit den Kontaktstellen (320a) der zweiten Signalübergabestelle des Mehrzweckschnittstellensockels (300) mittels elektrischer Kontakte elektrisch kontaktieren.

2. Das Messsystem mit dem Mehrzweckschnittstellensockel nach Anspruch 1, wobei
- der mechanische Anschlag so gestaltet ist, dass das Messgerät in zwei unterschiedlichen, um 180° gedrehten Orientierungen mit dem Mehrzweckschnittstellensockel zu verbinden ist.

3. Das Messsystem mit dem Mehrzweckschnittstellensockel nach einem der Ansprüche 1 bis 2, wobei
- die zweite Signalübergabestelle eine erste und eine zweite Kontaktstelle mit jeweils mehreren Kontakten aufweist, wobei die erste oder die zweite Kontaktstelle gebildet ist durch mehrere elektrische Kontaktstifte (400), die durch eine Federanordnung (402) vorgespannt sind, wobei jeder Kontaktstift (400) hat an seinem freien Ende ein Kontaktstück (406) hat, und die einzelnen Kontaktstifte durch ein diese einfassendes Formteil (414) voneinander beabstandet und in ihrer Position fixiert sind.

4. Das Messsystem mit dem Mehrzweckschnittstellensockel nach einem der Ansprüche 1 bis 3, wobei
- die zweite Signalübergabestelle eine erste und eine zweite Kontaktstelle mit jeweils mehreren Kontakten aufweist, wobei die erste oder die zweite Kontaktstelle gebildet ist durch mehrere elektrische SMT-bestückten Kontaktfedern, die bei in dem Mehrzweckschnittstellensockel aufgenommenen Messgeräts vorgespannt sind, wobei jede Kontaktfeder an ihrem freien Ende ein Kontaktstück hat, und die einzelnen Kontaktfedern voneinander beabstandet und in ihrer Position fixiert sind.

5. Das Messsystem mit dem Mehrzweckschnittstellensockel nach einem der Ansprüche 1 bis 4, wobei der Kontaktstift (400) ein pilzförmiges Kontaktstück (406) hat, das eine Einschnürung (408) aufweist, in der ein abdeckendes Gummiformteil (410) aufgenommen ist, das auch die Einschnürungen (408) der anderen Kontaktstifte (400) einfasst.

6. Das Messsystem mit dem Mehrzweckschnittstellensockel nach einem der vorhergehenden Ansprüche, bei dem eine Leiterplatte (PCB) am Messgerät (10) und/oder am Mehrzweckschnittstellensockel (300) jeweils eine abdichtende Ebene bildet und die ersten und zweiten Kontaktstellen (50a, 5) des Messgeräts (10) bzw. des Mehrzweckschnittstellensockels (300) mit dieser Leiterplatte (PCB) elektrisch und mechanisch verbunden, zum Beispiel verlötet sind.

7. Das Messsystem mit dem Mehrzweckschnittstellensockel nach einem der vorhergehenden Ansprüche, bei dem SMT-bestückte Kontaktfedern oder in das Gummiformteil (410) eingesetzte Kontaktpads (450) vorgesehen sind, die über Kontaktfedern (455) mit Kupferbahnen auf der Leiterplatte (PCB) kontaktieren.

## Claims

1. A non-contact measuring system with
(i) a contactless measuring device (10) comprising a light transmitter (14) and a light receiver (16) for determining the position of a tool or for determining the longest cutting edge of a rotating tool in a machine tool, and having
(ii) a multi-purpose interface base (300) for receiving and connecting the measuring device (10),
wherein the multi-purpose interface base (300) comprises the following features:
- at least one mechanical stop (310) corresponding to a mating stop on the measuring device (10) for receiving and repetitively accurately placing the measuring device (10) on the multi-purpose interface base (300), the stop (310) on the multi-purpose interface base (300) being adapted to corresponding to the counter stop arranged in a connecting block (30) between two legs (18, 20) of a U-shaped support structure (22), and the light transmitter (14) and the light receiver (16) of the measuring instrument (10) are arranged in the two legs (18, 20), respectively;
- at least one second signal transfer point corresponding to a first signal transfer point on the
measuring device (10) on the multi-purpose interface base (300), the second signal transfer point having a first and a second contact point (320a) each with a plurality of contacts, the first and second contact points being spaced apart from one another, and the plurality of contacts of the one contact point being arranged point-symmetrically to a centre with respect to the plurality of contacts of the other contact point; and
- at least one second fluid transfer point (320) on the multi-purpose interface base (300) corresponding to a first fluid transfer point (60) on the measuring device (10);
- the mechanical stop (310) of the multi-purpose interface base (300) is formed by receptacles for pegs (40) located on the bottom of the measuring device (10);
wherein
- the pegs (40) of the measuring system (10) are to be inserted into the receptacles so that contact points (50a) of the first signal transfer point of the measuring system (10) make electrical contact with the contact points (320a) of the second signal transfer point of the multi-purpose interface base (300) by means of electrical contacts.

2. The measuring system with the multi-purpose interface base according to claim 1, wherein
- the mechanical stop is designed to connect the measuring device to the multi-purpose interface base in two different orientations rotated by 180°.

3. The measuring system with the multi-purpose interface socket according to any one of claims 1 to 2, wherein
- the second signal transfer point comprises a first and a second contact point each having a plurality of contacts, wherein the first or the second contact point is formed by a plurality of electrical contact pins (400) which are biased by a spring arrangement (402), wherein each contact pin (400) has a contact piece (406) at its free end, and the individual contact pins are spaced apart from one another and fixed in position by a moulding (414) enclosing them.

4. The measuring system with the multi-purpose interface socket according to any one of claims 1 to 3, wherein
- the second signal transfer point comprises a first and a second contact point each having a plurality of contacts, wherein the first or the second contact point is formed by a plurality of electrical SMT-placed contact springs which are biased when the measuring device is accommodated in the multi-purpose interface socket, wherein each contact spring has a contact piece at its free end, and the individual contact springs are spaced apart from one another and fixed in position.

5. The measuring system with the multi-purpose interface socket according to any one of claims 1 to 4, wherein the contact pin (400) has a mushroom-shaped contact piece (406) comprising a constriction (408) in which a covering rubber moulding (410) is received which also encloses the constrictions (408) of the other contact pins (400).

6. The measuring system with the multi-purpose interface socket according to any one of the preceding claims, wherein a printed circuit board (PCB) on the measuring device (10) and/or on the multi-purpose interface socket (300) respectively forms a sealing plane and the first and second contact points (50a, 5) of the measuring device (10) and of the multi-purpose interface socket (300) respectively are electrically and mechanically connected, for example soldered, to this printed circuit board (PCB).

7. The measuring system with the multi-purpose interface socket according to any one of the preceding claims, wherein SMT-placed contact springs or contact pads (450) inserted into the rubber moulding (410) are provided which contact copper tracks on the printed circuit board (PCB) via contact springs (455).

## Revendications

1. Un système de mesure sans contact avec
(i) un dispositif de mesure sans contact (10) comprenant un émetteur de lumière (14) et un récepteur de lumière (16) pour déterminer la position d'un outil ou pour déterminer la plus longue arête de coupe d'un outil rotatif dans une machine-outil, et ayant
(ii) une base d'interface multi-usages (300) pour recevoir et connecter le compteur (10),
dans lequel la base d'interface multi-usages (300) présente les caractéristiques suivantes:
- au moins une butée mécanique (310) correspondant à une butée d'accouplement sur le compteur (10) pour recevoir et placer de manière répétitive et précise le compteur (10) sur la base d'interface multi-usages (300), dans laquelle la butée (310) sur la base d'interface multi-usages (300) est adaptée pour, correspondant à la contre-butée qui est disposée dans un bloc de liaison (30) entre deux branches (18, 20) d'une structure de support en forme de U (22), et l'émetteur de lumière (14) et le récepteur de lumière (16) du dispositif de mesure (10) sont disposés dans les deux branches (18, 20), respectivement;
- au moins un deuxième point de transfert de signal correspondant à un premier point de transfert de signal sur le dispositif de mesure (10) sur la base d'interface multi-usages (300), dans lequel le deuxième point de transfert de signal a un premier et un deuxième point de contact (320a) chacun avec une pluralité de contacts, dans lequel les premier et deuxième points de contact sont espacés l'un de l'autre, et dans lequel la pluralité de contacts du premier point de contact sont disposés de manière ponctuellement symétrique à un centre par rapport à la pluralité de contacts de l'autre point de contact; et
- au moins un deuxième point de transfert de fluide (320) sur la base d'interface multi-usages (300) correspondant à un premier point de transfert de fluide (60) sur le compteur (10);
- la butée mécanique (310) de la base d'interface multi-usages (300) est formée par des réceptacles pour des chevilles (40) situés au fond du compteur (10) dans lequel
- les chevilles (40) du système de mesure (10) doivent être insérées dans les réceptacles de sorte que les points de contact (50a) du premier point de transfert de signaux du système de mesure (10) établissent un contact électrique avec les points de contact (320a) du second point de transfert de signaux de la base d'interface multi-usages (300) au moyen de contacts électriques.

2. Le système de mesure comprenant la base d'interface multi-usages selon la revendication 1, dans lequel
- la butée mécanique est configurée pour connecter le système de mesure à la base d'interface multi-usages dans deux orientations différentes tournées de 180°.

3. Le système de mesure avec la base d'interface multi-usages selon l'une quelconque des revendications 1 à 2, dans lequel
- le deuxième point de transfert de signal comprend un premier et un deuxième point de contact ayant chacun une pluralité de contacts, dans lequel le premier ou le deuxième point de contact est formé par une pluralité de broches de contact électrique (400) qui sont sollicitées par un agencement de ressort (402), dans lequel chaque broche de contact (400) a une pièce de contact (406) à son extrémité libre, et les broches de contact individuelles sont espacées et fixées en position par un moulage (414) les entourant.

4. Le système de mesure avec la base d'interface multi-usages selon l'une des revendications 1 à 3, dans lequel
- le deuxième point de transfert de signal comprend un premier et un deuxième point de contact ayant chacun une pluralité de contacts, dans lequel le premier ou le deuxième point de contact est formé par une pluralité de ressorts de contact placés de CMS électriques qui sont sollicités lorsque le dispositif de mesure est logé dans la base d'interface multi-usages, dans laquel chaque ressort de contact a une pièce de contact à son extrémité libre, et les ressorts de contact individuels sont espacés les uns des autres et fixés en position.

5. Le système de mesure comprenant la base d'interface multi-usages selon l'une quelconque des revendications 1 à 4, dans lequel la broche de contact (400) présente une pièce de contact (406) en forme de champignon comprenant un rétrécissement (408) dans lequel est reçue une pièce moulée en caoutchouc de recouvrement (410) qui entoure également les rétrécissements (408) des autres broches de contact (400).

6. Le système de mesure avec la base d'interface multi-usages selon l'une quelconque des revendications précédentes, dans lequel une carte de circuit imprimé (PCB) sur le dispositif de mesure (10) et/ou sur la base d'interface multi-usages (300) forme respectivement un plan d'étanchéité et les premier et deuxième points de contact (50a, 5) du système de mesure (10) et de la base d'interface multi-usages (300) sont respectivement reliés électriquement et mécaniquement, par exemple par brasage, à cette carte de circuit imprimé (PCB).

7. Le système de mesure comprenant la base d'interface multi-usages selon l'une quelconque des revendications précédentes, dans lequel il est prévu des ressorts de contact ou des pattes de contact (450) placés de SMT insérés dans la pièce moulée en caoutchouc (410), qui entrent en contact avec des pistes de cuivre sur la carte de circuit imprimé (PCB) par l'intermédiaire de ressorts de contact (455).
